# EUROPÄISCHE PATENTSCHRIFT

(11) **EP 0 662 297 B1**
(45) Veröffentlichungstag und Bekanntmachung des Hinweises auf die Patenterteilung: **30.08.1995**
(21) Anmeldenummer: 93121055.3
(22) Anmeldetag: 29.12.1993
(51) Int. Cl.: A47J 31/46

(54) **Vorrichtung zur Zubereitung von Milchschaum für Cappuccino**
Device for producing frothed milk for cappuccino
Dispositif pour produire du lait moussé pour cappuccino

(43) Veröffentlichungstag der Anmeldung: 12.07.1995
(73) Patentinhaber: ARTHUR EUGSTER AG ELEKTROHAUSHALTSGERÄTE, CH-8590 Romanshorn (CH)
(72) Erfinder: Mahlich, Gotthard, Dipl.-Ing., D-61476 Kronberg/Ts. (DE)
(74) Vertreter: Schubert, Siegmar, Dipl.-Ing.

(56) Entgegenhaltungen:
- EP-A- 0 555 766
- EP-A- 0 575 762
- DE-A- 3 942 713
- FR-A- 2 638 083

## Beschreibung

Die Erfindung betrifft eine Vorrichtung zur Zubereitung von Milchschaum für Cappucino (Milch-Kaffeegetränk) mit einem Dampfrohr, das an einen Heißdampfgenerator einer Kaffee- oder Expressomaschine angeschlossen ist und das im Betrieb von Heißdampf durchströmt wird, der, unter Zumischung von Luft und ggfs. von Milch, das Dampfrohr über eine Auslaßanordnung als Gemisch verläßt, wobei das Dampfrohr wenigstens zwei Auslässe für das Gemisch hat, von denen wenigstens einer in Bezug auf das Dampfrohr radial ausgerichtet ist und die direkt in ein Gefäß mit Milch öffnen und wobei koaxial zu dem Dampfrohr ein Außenrohr vorgesehen ist und zwischen den beiden Rohren wenigstens ein Strömungskanal für die Luft ausgebildet ist.

Derartige Vorrichtungen sind in zahlreichen Ausführungsformen Stand der Technik. Nach diesseitiger Kenntnis ist allen bekannten Ausführungsformen gemeinsam, daß das Gemisch das Dampfrohr in axialer Richtung über einen einzigen Auslaß verläßt. Damit besteht aber die Gefahr, daß die Milch in unmittelbarer Umgebung der Auslaßdüse - das untere Ende des Dampfrohrs taucht im Betrieb in ein Gefäß mit Milch ein - zu stark erhitzt wird. Erwärmt man nämlich die Milch bei der Zubereitung von Cappucino bis nahe an den Siedepunkt der Milch, so ist diese nicht mehr in der Lage, Milchschaum mit einer Qualität zu bilden, wie er für Cappucino verlangt wird.

Als Beispiele für den erwähnten Stand der Technik wird verwiesen auf die deutsche Offenlegungsschrift DE-A-39 42 713, auf die europäische Offenlegungsschrift EP-A-0 472 227 und auch auf die europäische Offenlegungsschrift EP-A- 575762 der Anmelderin.

Eine Vorrichtung mit den eingangs genannten Merkmalen ist in der EP-A-0 555 766 beschrieben. Diese Konstruktion ist sehr aufwendig. So muß ein gesondertes Teil vorgesehen werden, das zwischen Dampfrohr und Außenrohr angebracht wird und das eine verhältnismäßig komplizierte Form aufweist. In dieser Form müssen Bohrungen angebracht werden zur Ausbildung der Strömungskanäle und Düsen. Außerdem muß das Außenrohr an der Unterseite beabstandet von dem Zwischenstück angebracht werden, damit die radialen Strömungskanäle ausgebildet werden können.

Die Erfindung vermeidet diese Nachteile. Ihr liegt die Aufgabe zugrunde, auf konstruktiv möglichst einfache Weise eine Vorrichtung mit den Merkmalen des Oberbegriffs von Patentanspruch 1 vorzuschlagen, bei der eine Überhitzung der Milch im Betrieb vermieden wird.

Zur Lösung dieser Aufgabe ist die Erfindung dadurch gekennzeichnet, daß die Wand des Strömungskanals für die Luft von den beiden Rohren gebildet wird und daß die radial ausgerichteten Auslässe durch miteinander fluchtende Öffnungen in den beiden Rohren ausgebildet sind.

Man verteilt somit das ausströmende und heiße Gemisch auf wenigstens zwei Auslässe und dadurch wird das heiße Gemisch auf ein größeres Volumen an Milch in dem Gefäß verteilt, in das das Dampfrohr mit seinem unteren Ende eintaucht. Dadurch werden nachteilige Überhitzungen der Milch bzw. des Gemisches vermieden.

Im allgemeinen sollen alle Auslässe für das Gemisch radial zu dem Dampfrohr verlaufen, und zwar im allgemeinen an dessen unteren Ende vorgesehen sein. Es ist aber auch denkbar, daß ein Auslaß, ähnlich wie beim Stand der Technik, in der axialen Verlängerung des Dampfrohres vorgesehen ist, wobei dann wenigstens ein weiterer der Auslässe für das Gemisch radial zum Dampfrohr angeordnet ist.

Bevorzugt wird es, wenn alle Auslässe radial angeordnet sind, auch weil dann ein möglichst großer räumlicher Abstand zwischen den Erhitzungszonen in dem betreffenden Gefäß erreicht wird. Diese sollen einen gleichen Winkelabstand voneinander einhalten, damit die Erhitzungszonen möglichst weit voneinander entfernt sind und die Wärme sich daher im Gefäß bzw. in der im Gefäß befindlichen Milch bzw. im Gemisch gut verteilt. Diese Ausführungsform, bei der alle Auslässe radial angeordnet sind, ist auch konstruktiv besonders einfach.

Die miteinander fluchtenden Öffnungen müssen nicht konzentrisch zueinander angeordnet sein, obgleich dies natürlich vorteilhaft ist. Sie können auch gleiche Querschnitte haben, obgleich es bevorzugt wird, wenn der Auslaß im äußeren der beiden Rohre einen größeren Querschnitt hat als der Auslaß im Inneren der beiden Rohre. Bei dieser bevorzugten Ausführungsform ergibt sich eine Druckerniedrigung im Übergangsbereich zwischen den beiden Auslässen mit den unterschiedlichen Querschnitten und in diesen Bereich wird dann die Luft angesaugt.

Die erwähnten Auslässe wird man auf geeignete Weise herstellen, beispielsweise als Bohrungen. Bezüglich des Auslasses des Innenrohrs ist es denkbar, daß der Querschnitt des Auslasses kritisch ist und in diesem Fall wird es bevorzugt, wenn der Auslaß des Innenrohrs als von der freien Kante des Rohres ausgehende Fräsung ausgebildet ist. Eine solche Fräsung kann leichter hergestellt werden als eine Bohrung und vor allem kann der freie Querschnitt besser kontrolliert werden.

Es wurde schon erwähnt, daß mit der erfindungsgemäßen Vorrichtung ggf. auch Milch angesaugt und zugemischt wird. Wenn dies der Fall sein soll, so kann dies dadurch geschehen, daß in den Bereich der miteinander fluchtenden Auslässe eine Ansaugöffnung für Milch einmündet. Die Milch wird dann aus dem Gefäß angesaugt, in das das untere Ende des Dampfrohres der Vorrichtung eintaucht.

Es wurde auch schon darauf hingewiesen, daß Sorge dafür getragen werden muß, daß die Milch nicht überhitzt wird. Zu diesem Zweck wird es bevorzugt, wenn das Außenrohr sowie eine stirnseitige Abschlußplatte der Vorrichtung aus Kunststoff bestehen, d.h. aus einem Wärmeisoliermaterial.

Die Außenseite des Außenrohres sowie ggf. auch die Außenseite der Abschlußplatte können metallisiert sein. Dies erleichtert die Reinigung dieser Teile und führt auch zu einem besseren Aussehen der Vorrichtung.

Üblicherweise wird bei derartigen Espressomaschinen oder Kaffeemaschinen das Aufschäumgefäß (Milchbecher) mit der Hand gehalten und von unten in das Dampfrohr eingeführt, so daß der Schäumkopf des Dampfrohres in die im Behälter befindliche Milch eintaucht. Es kann aber Vorteile bringen, wenn der Behälter an der Maschine lösbar befestigt ist und trotzdem eine Möglichkeit gegeben ist, die Milch aufzuschäumen.

Dies ist erfindungsgemäß dadurch möglich, daß im Boden des Behälters eine Öffnung für das Einsetzen des Dampfrohres vorgesehen ist.

Weil erfindungsgemäß der Heißdampf in Bezug auf das Dampfrohr radial abgegeben wird, kann also das Dampfrohr vom Boden her in das Gefäß eintauchen und im Betrieb spritzt keine Flüssigkeit hoch, wie dies der Fall wäre, wenn der Heißdampf das Dampfrohr in axialer Richtung verlassen würde.

Diese Ausgestaltung der Erfindung bringt eine fühlbare Verbesserung des Bedienungskomforts einer derartigen Maschine mit sich.

Der Aufschäumbehälter kann, beispielsweise zu Reinigungszwekken, bequem vom Schäumkopf des Dampfrohres abgezogen werden und wird dann wieder aufgesetzt; die Vorrichtung ist dann wieder betriebsbereit.

Um zu verhindern, daß im Behälter befindliche Milch durch die Dampfauslässe nach unten in das Dampfrohr strömt, wenn dieses nicht mit Heißdampf beaufschlagt wird, wird es bevorzugt, wenn die Auslässe des Schäumkopfes verschließbar sind.

Dieses Verschließen und Wiederöffnen erfolgt vorzugsweise durch eine vertikale Bewegung eines Verschlusses und diese Bewegung ist abermals vorzugsweise mit einem Ventil gekoppelt, das das Dampfrohr öffnet bzw. schließt. Mit dem Öffnen des Dampfrohres werden somit die Dampfauslässe des Schäumkopfes des Dampfrohres geöffnet und mit dem Schließen des Dampfrohres werden die Auslässe ebenfalls wieder verschlossen. Dies erfolgt durch eine geeignete mechanische Kupplung.

Die Erfindung wird im folgenden anhand von Ausführungsbeispielen näher erläutert, aus denen sich weitere wichtige Merkmale ergeben. Es zeigt:
- Fig. 1: eine Ansicht einer erfindungsgemäßen Vorrichtung;
- Fig. 2: einen Längsschnitt durch die Vorrichtung nach Fig. 1, und zwar senkrecht zur Papierebene von Fig. 1;
- Fig. 3: einen Schnitt längs der Linie A-B von Fig. 1;
- Fig. 4: einen Schnitt längs der Linie C-D von Fig. 1;
- Fig. 5: den unteren linken Teil der Vorrichtung nach Fig. 2 bei einer demgegenüber abgeänderten Ausführungsform;
- Fig. 6: eine abermals abgeänderte Ausführungsform.

Die Figuren zeigen ein Dampfrohr 1, dessen oberes Ende an einen Heißdampfgenerator einer Kaffee- oder Espressomaschine angeschlossen ist, so daß das Dampfrohr im Betrieb in Richtung des Pfeiles 2 von Heißdampf durchströmt wird.

Das untere Ende des Dampfrohres ist mit einer stirnseitigen Abschlußplatte 3 verschlossen.

Das Innenrohr oder Dampfrohr 1 ist von einem Außenrohr 4 umgeben, wobei zwischen den beiden Rohren 1, 4 auf geeignete Weise wenigstens ein Strömungskanal 5 für Luft ausgebildet ist. Fig. 4 zeigt, daß hier zwei der Strömungskanäle 5 ausgebildet sind, und zwar bei dieser Ausführungsform durch axiale Bohrungen an der Innenseite des Außenrohres 4 und/oder an der Außenseite des Innenrohres 1.

Am unteren Ende hat das Dampfrohr 1 wenigstens einen radial nach außen gerichteten Auslaß 6 und das Außenrohr 4 hat einen damit fluchtenden, ebenfalls radial verlaufenden Auslaß 7.

Im Betrieb verläßt der Heißdampf das Dampfrohr 1 durch die Auslässe 6, 7, wobei in Pfeilrichtung 8 angesaugte Luft im Bereich der Querschnittserweiterung zwischen den Auslässen 6, 7 in diese eintritt und dadurch mitgerissen wird. Dadurch wird das für die Zubereitung von Cappucino notwendige heiße Gemisch gebildet, das dann in Richtung des Pfeiles 9 in die Milch eintritt, die in einem zeichnerisch nicht dargestellten Gefäß vorgesehen ist, in das die gezeigte Vorrichtung mit ihrem unteren Ende eintaucht.

Links unten in Fig. 2 ist eine weitere Bohrung 10 angedeutet, durch die die Milch angesaugt wird, sofern diese Bohrung 10 vorgesehen ist, die dann dem Gemisch ebenfalls zugemischt wird.

Rechts unten in Fig. 2 ist diejenige Ausführungsform gezeigt, bei der keine Bohrung für die Milch vorgesehen ist.

Nach Fig. 2 sind die Auslässe 6, 7 konzentrisch zueinander angeordnet. Fig 5 zeigt, daß dies nicht notwendigerweise der Fall ist, wo der Auslaß 6 des Innenrohres von dem freien Ende des Innenrohres ausgeht.

Wie bereits erwähnt, ist wenigstens einer der radialen Auslässe 6, 7 vorgesehen. Bevorzugt und zeichnerisch dargestellt ist der Fall, bei dem alle Auslässe radial angeordnet sind. Denkbar wäre es aber auch, einen axialen Auslaß anzubringen, wie bei Position 11 angedeutet, der dann in der Stirnplatte 3 ausgebildet ist.

Es ist somit auch ersichtlich, daß Austrittsdüsen, d.h. Auslässe mit stetig sich ändernden Querschnitten, nicht unbedingt vorgesehen sein müssen, wie dies beim Stand der Technik durchgehend der Fall ist.

Dadurch, daß erfindungsgemäß wenigstens zwei der Auslässe für das gebildete Gemisch vorgesehen sind, werden jeweils kleinere Volumina der Milch erhitzt und die Wärmeenergie des Dampferzeugers verteilt sich über ein größeres Gebiet und dadurch wird die Gefahr der Überhitzung der Milch vermieden. Dieser Effekt wird noch verbessert, wenn, wie es bevorzugt wird, alle Auslässe 6, 7 für das Gemisch radial zum Dampfrohr 1 angeordnet sind, wie dies auch zeichnerisch dargestellt ist.

Sofern einer der Auslässe axial angeordnet ist (zeichnerisch nicht dargestellt), so muß ihm ebenfalls Luft zugemischt werden. Dies kann beispielsweise dadurch geschehen, daß der in Fig. 2 linke (oder rechte) Auslaß 7 verschlosen wird, so daß Luft über den zugehörigen Auslaß 6 dieses axialen Auslasses (bei Pos. 11 in Fig. 2) zugegeben wird.

Wenn in Zusammenhang mit dieser Erfindung von einer radialen Ausrichtung der Auslässe gesprochen wird, so muß der Winkel der Ausrichtung nicht genau 90° mit der Achse des Dampfrohres einschließen, obgleich dies aus konstruktiven Gründen bevorzugt wird. Vielmehr können auch Winkel größer oder kleiner als 90° verwirklicht werden, sofern die Erfindungsaufgabe gelöst wird.

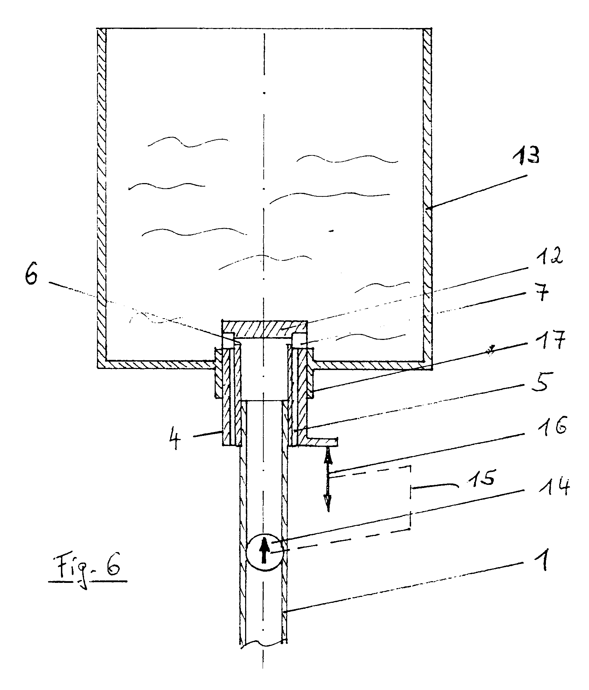

Fig. 6 zeigt eine abermals abgeänderte Ausführungsform, wobei das Dampfrohr 1 mit seinem Schäumkopf 12 von unten in den Boden eines Aufschäumbehälters 13 eingesetzt ist, der hierzu eine geeignete Öffnung hat.

Über ein bei Pos. 14 angedeutetes Ventil kann der Dampfaustritt des Dampfrohres 1 geöffnet bzw. geschlossen werden. Bei Pos. 15 ist angedeutet, daß das Ventil mechanisch mit dem Außenrohr 4 verbunden ist, so daß das Außenrohr bzw. der gesamte Schäumkopf 12 in Richtung des Doppelpfeiles 16 gehoben bzw. gesenkt werden kann.

Die Öffnung ist von einem Ringstutzen 17 umgeben, so daß bei dieser Verschiebebewegung in Richtung des Pfeiles 16 relativ zum gehäusefesten Behälter 13 die Öffnungen 7 verschlossen bzw. geöffnet werden, und zwar über eine entsprechende Betätigung des Ventils 14.

Die hier notwendigen Dichtungen sind der Einfachheit halber zeichnerisch nicht dargestellt.

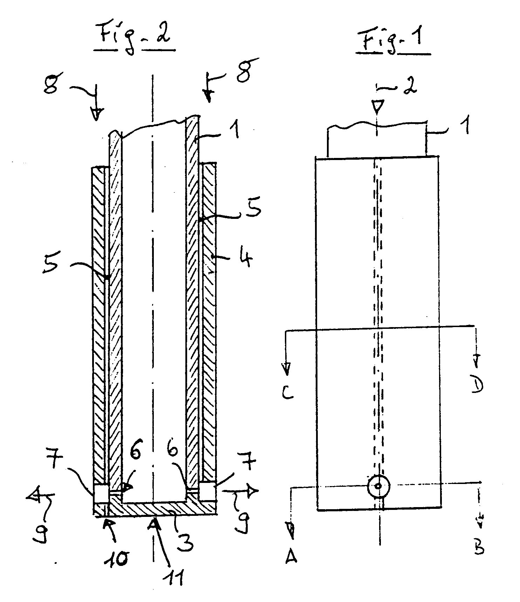

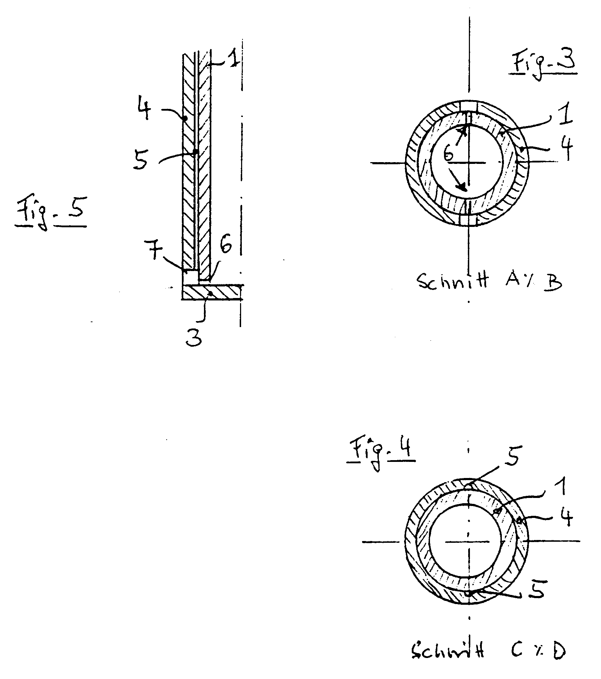

Bei den Ausführungsformen nach Fig. 1 bis 5 ist ebenfalls ein derartiger Behälter 13 vorgesehen, dort aber ohne eine Öffnung in seinem Boden und der Behälter wird von unten über den Schäumkopf des Dampfrohres geführt, so daß auch bei dieser Ausführungsform der Schäumkopf in die Milch im Behälter eintaucht.

## Patentansprüche

1. Vorrichtung zur Zubereitung von Milchschaum für Cappucino (Milch-Kaffeegetränk) mit einem Dampfrohr (1), das an einen Heißdampfgenerator einer Kaffee- oder Expressomaschine angeschlossen ist und das im Betrieb von Heißdampf durchströmt wird, der, unter Zumischung von Luft und ggfs. von Milch, das Dampfrohr (1) über eine Auslaßanordnung als Gemisch verläßt, wobei das Dampfrohr (1) wenigstens zwei Auslässe (6, 7) für das Gemisch hat, von denen wenigstens einer in Bezug auf das Dampfrohr (1) radial ausgerichtet ist und die direkt in ein Gefäß mit Milch öffnen und wobei koaxial zu dem Dampfrohr (1) ein Außenrohr (4) vorgesehen ist und zwischen den beiden Rohren (1, 4) wenigstens ein Strömungskanal (5) für die Luft ausgebildet ist,
**dadurch gekennzeichnet,**
daß die Wand des Strömungskanals (5) für die Luft von den beiden Rohren (1, 4) gebildet wird und daß die radial ausgerichteten Auslässe durch miteinander fluchtende Öffnungen (6, 7) in den beiden Rohren (1, 4) ausgebildet sind.

2. Vorrichtung nach Anspruch 1,
**dadurch gekennzeichnet,**
daß alle Auslässe (6,7) für das Gemisch in Bezug auf das Dampfrohr (1) radial angeordnet sind.

3. Vorrichtung nach Anspruch 1 oder 2,
**dadurch gekennzeichnet,**
daß die radial angeordneten Auslässe (6,7) voneinander gleiche Winkelabstände haben.

4. Vorrichtung nach einem der Patentansprüche 1 bis 3,
**dadurch gekennzeichnet,**
daß der Auslaß (7) im äußeren der beiden Rohre (4) einen größeren Querschnitt hat als der Auslaß (6) im Inneren der beiden Rohre (1).

5. Vorrichtung nach einem der Ansprüche 1 bis 4,
**dadurch gekennzeichnet,**
daß der Auslaß (6) des Innenrohres (1) als von der freinen Kante des Rohres ausgehende Fräsung ausgebildet ist.

6. Vorrichtung nach einem der Ansprüche 1 bis 5,
**dadurch gekennzeichnet,**
daß in den Bereich der miteinander fluchtenden Auslässe (6,7) eine Ansaugöffnung (10) für Milch einmündet.

7. Vorrichtung nach einem der Anspruch 1 bis 6,
**dadurch gekennzeichnet,**
daß das Außenrohr (4) sowie eine stirnseitige Abschlußplatte (3) der Vorrichtung aus Kunststoff bestehen, dessen Außenseite ggf. metallisiert ist.

8. Vorrichtung nach einem der Ansprüche 1 bis 7,
**dadurch gekennzeichnet,**
daß das freie Ende des Dampfrohres (1) einen Schäumkopf (12) bildet, in dem die Auslässe (6,7) ausschließlich radial angeordnet sind, und der in einen Aufschäumbehälter (13) einmündet, wobei im Boden des Behälters (13) eine Öffnung (Stutzen 17) für das Einsetzen des Dampfrohres (1) vorgesehen ist.

9. Vorrichtung nach Anspruch 8,
**dadurch gekennzeichnet,**
daß die Auslässe (6,7) des Schäumkopfes (12) verschließbar sind.

## Claims

1. A device for the preparation of milk froth for cappuccino (milk-coffee drink) having a steam pipe (1) which is connected to a superheated steam producer of a coffee or expresso machine and through which superheated steam flows during operation, this superheated steam, with the addition of air and possibly of milk, leaving the steam pipe (1) as a mixture via a discharge arrangement, the steam pipe (1) having at least two outlets (6, 7) for the mixture - at least one of which is directed radially in relation to the steam pipe (1) - which open directly into a vessel of milk, and an outer pipe (4) being provided coaxial to the steam pipe (1) and at least one flow channel (5) for the air being formed between the two pipes (1, 4), characterised in that the wall of the flow channel (5) for the air is formed by the two pipes (1, 4) and in that the radially directed outlets are formed by aligned openings (6, 7) in the two pipes (1, 4).

2. A device in accordance with Claim 1, characterised in that all outlets (6, 7) for the mixture are arranged radially in relation to the steam pipe (1).

3. A device in accordance with Claim 1 or 2, characterised in that the radially arranged outlets (6, 7) are at the same angular distance from one another.

4. A device in accordance with any one of Claims 1 to 3, characterised in that the outlet (7) in the outer of the two pipes (4) has a larger cross-section than the outlet (6) in the inner of the two pipes (1).

5. A device in accordance with any one of Claims 1 to 4, characterised in that the outlet (6) of the inner pipe (1) is in the form of a milled cutting issuing from the free edge of the pipe.

6. A device in accordance with any one of Claims 1 to 5, characterised in that an intake opening (10) for milk issues into the region of the aligned outlets (6, 7).

7. A device in accordance with any one of Claims 1 to 6, characterised in that the outer pipe (4) and a front-end closing plate (3) of the device are composed of a plastics material the exterior of which is possibly metallized.

8. A device in accordance with any one Claims 1 to 7, characterised in that the free end of the steam pipe (1) forms a frothing head (12) in which the outlets (6, 7) are arranged solely radially and which issues into a frothing receptacle (13), an opening (connection piece 17) for the insertion of the steam pipe (1) being provided in the base of the receptacle (13).

9. A device in accordance with Claim 8, characterised in that the outlets (6, 7) of the foam head (12) can be closed.

## Revendications

1. Dispositif pour la préparation de lait moussé pour Cappucino (boisson à base de lait et de café) comportant un tuyau à vapeur (1), qui est raccordé à un générateur de vapeur chaude d'un percolateur à café ou à expresso et qui, en service, est traversé par de la vapeur chaude qui, avec mélange d'air et éventuellement de lait, quitte le tuyau à vapeur (1), sous forme de mélange, au travers d'un ensemble d'orifices de sortie, le tuyau à vapeur (1) comportant au moins deux orifices de sortie (6, 7) pour le mélange, dont un au moins est orienté radialement par rapport au tuyau à vapeur (1) et qui s'ouvrent directement dans un récipient contenant du lait, tandis qu'un tuyau extérieur (4) est disposé coaxialement au tuyau à vapeur (1) et qu'entre les deux tuyaux (1, 4), est défini au moins un canal d'écoulement (5) pour l'air,
caractérisé en ce que,
la paroi du canal d'écoulement (5) pour l'air est formée par les deux tuyaux (1, 4) et en ce que les orifices de sortie orientés radialement sont définis par des ouvertures (6, 7) ménagées dans les deux tuyaux (1, 4), qui sont alignées l'une avec l'autre.

2. Dispositif selon la revendication 1, caractérisé en ce que tous les orifices de sortie (6, 7) pour le mélange sont disposés radialement par rapport au tuyau à vapeur (1).

3. Dispositif selon la revendication 1 ou 2, caractérisé en ce que les orifices de sortie (6, 7) disposés radialement sont à des distances angulaires identiques l'un de l'autre.

4. Dispositif selon l'une des revendications 1 à 3, caractérisé en ce que l'orifice de sortie (7) ménagé dans le plus extérieur des deux tuyaux (4) présente une section plus grande que l'orifice de sortie (6) ménagé dans le plus intérieur des deux tuyaux (1).

5. Dispositif selon l'une des revendications 1 à 4, caractérisé en ce que l'orifice de sortie (6) du tuyau intérieur (1) est réalisé sous forme d'un fraisage formé à partir du bord libre du tuyau.

6. Dispositif selon l'une des revendications 1 à 5, caractérisé en ce qu'une ouverture d'aspiration (10) pour du lait débouche dans la région des orifices de sortie (6, 7) alignés l'un avec l'autre.

7. Dispositif selon l'une des revendications 1 à 6, caractérisé en ce que le tuyau extérieur (4) ainsi qu'une plaque de fermeture frontale (3) du dispositif sont constitués en une matière plastique, dont la face extérieure est éventuellement métallisée.

8. Dispositif selon l'une des revendications 1 à 7, caractérisé en ce que l'extrémité libre du tuyau à vapeur (1) forme une tête de moussage (12), dans laquelle les orifices de sortie (6, 7) sont exclusivement disposés radialement, et qui débouche dans un récipient de formation de mousse (13), une ouverture (embout 17) étant prévue dans le fond du récipient (13) pour l'insertion du tuyau à vapeur (1).

9. Dispositif selon la revendication 8, caractérisé en ce que les orifices de sortie (6, 7) de la tête de moussage (12) sont obturables.
